# EUROPEAN PATENT APPLICATION

(11) **EP 4 843 715 A1**
(43) Date of publication of application: **25.11.2026**
(21) Application number: 25898642.1
(22) Date of filing: 05.02.2025
(51) Int. Cl.: B25J 13/08, B25J 5/00, B25J 9/16, B25J 11/00, B25J 19/02, G05D 1/246, G06V 40/16

(54) **MOBILE ROBOT FOR PROVIDING OUTPUT INFORMATION ON BASIS OF USER DETECTION INFORMATION, AND OPERATION METHOD THEREOF**

(30) Priority: 29.11.2024 KR 20240175259
(71) Applicant: LG Electronics Inc., Yeongdeungpo-gu Seoul 07336 (KR)
(72) Inventor: JEON, Hyun Joo, Seoul 08592 (KR); KONG, Hye Soo, Seoul 08592 (KR)
(74) Representative: Vossius & Partner Patentanwälte Rechtsanwälte mbB
(86) International application number: PCT/KR2025/001705
(87) International publication number: WO 2026/116592

(57) **Abstract**

The present disclosure relates to a mobile robot for providing output information based on user detection information and an operating method thereof.

A mobile robot according to one aspect of the present disclosure includes a camera unit configured to capture an image of an area in front of the mobile robot, a user interface unit including at least one of a speaker or a display, and a processor unit configured to, when a user is included in an image transmitted from the camera unit, generate user detection information regarding the user based on the image and a pre-generated map, and output output information corresponding to the generated user detection information.

## Description

### TECHNICAL FIELD

The present disclosure relates to a mobile robot for providing output information based on user detection information and an operating method thereof, and more particularly, to a mobile robot for providing output information based on user detection information that provides optimized output information to a user based on user detection information, and an operating method thereof.

### BACKGROUND

A mobile robot freely moves through an indoor space and provides services optimized for a user through a user interface (UI) such as a speaker, a display, and the like.

For example, when the mobile robot receives a user command, the mobile robot provides output information to the user by outputting sound, an image, and text based on the user command. In addition, for example, the mobile robot may detect an abnormal situation (e.g., fire) while moving through the indoor space and provide a notification to the user through the speaker, thereby providing the user with a notification of the occurrence of the abnormal situation.

In this regard, in existing technology, output information is provided to the user in a manner similar to that of a user terminal (e.g., a smartphone, a tablet) used at a short distance from the user, without considering the distance between the user and the mobile robot.

For example, when the mobile robot received a user command for news streaming, the mobile robot performed news streaming through the speaker while simultaneously outputting text through the display to provide information to the user. However, the distance between the user and the mobile robot constantly changes, becoming farther away or closer.

As a result, in existing technology, since information was provided without considering the distance between the mobile robot and the user, when the distance between the user and the mobile robot was large, text readability deteriorated, and the user could not accurately receive the output information provided by the mobile robot.

Also, for example, when the mobile robot detected an abnormal situation, the mobile robot provided a notification to the user through the speaker.

As a result, in existing technology, the mobile robot merely provided a notification of the occurrence of the abnormal situation to the user, and it was difficult for the mobile robot to provide the user with output information for responding to the abnormal situation.

### DISCLOSURE

### TECHNICAL PROBLEM

The present disclosure has been made in view of addressing the foregoing issues, and is directed to providing a mobile robot for providing output information based on user detection information, capable of estimating a distance between a user and the mobile robot and providing information optimized for the user based on the estimated distance, and an operating method thereof.

The present disclosure is further directed to providing a mobile robot for providing output information based on user detection information, capable of estimating an area in which the user is located and providing information optimized for the user based on the estimated area in which the user is located, and an operating method thereof.

The present disclosure is further directed to providing a mobile robot for providing output information based on user detection information, capable of recognizing a face of a user, estimating an angle of the recognized face of the user, and providing information optimized for the user based on the estimated face angle of the user, and an operating method thereof.

Aspects of the present disclosure are not limited to those mentioned above, and other aspects and advantages not mentioned above will be understood from the following description, and become more apparent from the exemplary embodiments of the present disclosure. Moreover, aspects and advantages of the present disclosure may be realized by the means and combinations thereof indicated in claims.

### TECHNICAL SOLUTION

To achieve the above aspects, a mobile robot for providing output information based on user detection information according to the present disclosure is technically characterized by providing information optimized for a user based on user detection information detected regarding the user.

Specifically, the mobile robot detects user detection information including a distance between the user and the mobile robot, an area in which the user is located, and a face angle of the user based on an image, and sets an information representation manner based on the detected user detection information, so that even when the mobile robot performs the same function, the mobile robot provides output information based on the user detection information, thereby providing information optimized for the user.

To this end, a mobile robot according to one aspect of the present disclosure includes a camera unit configured to capture an image of an area in front of the mobile robot, a user interface unit including at least one of a speaker or a display, and a processor unit configured to, when a user is included in an image transmitted from the camera unit, generate user detection information regarding the user based on the image and a pre-generated map, and output output information corresponding to the generated user detection information.

Preferably, the processor unit may be configured to detect a human form and a face in the image, estimate a distance between the mobile robot and the user when the detected face matches pre-stored user information, and generate user detection information by estimating an area in which the user is located based on the map and the estimated distance between the mobile robot and the user.

Preferably, the processor unit may be configured to generate user detection information indicating whether the estimated area in which the user is located is the same as an area in which the mobile robot is located, based on the estimated area in which the user is located, and output the output information based on whether the estimated area in which the user is located and the area in which the mobile robot is located are the same.

Preferably, the processor unit may be configured to, when an estimated distance between the mobile robot and the user is less than a distance threshold, generate user detection information by estimating a face angle of the user based on an angle of at least one of the user's nose or mouth, and output the output information based on the estimated face angle of the user.

Meanwhile, a method for operating a mobile robot according to one aspect of the present disclosure includes capturing an image of an area in front of the mobile robot, when a user is included in an image transmitted from a camera unit, generating user detection information regarding the user based on the image and a pre-generated map, and outputting output information corresponding to the generated user detection information.

Preferably, generating the user detection information may include detecting a human form and a face in the image, estimating a distance between the mobile robot and the user when the detected face matches pre-stored user information, and estimating an area in which the user is located based on the estimated distance between the mobile robot and the user.

Preferably, generating the user detection information may include generating user detection information indicating whether the estimated area in which the user is located is the same as an area in which the mobile robot is located, based on the estimated area in which the user is located, and outputting the output information may include outputting the output information based on whether the estimated area in which the user is located and the area in which the mobile robot is located are the same.

Preferably, generating the user detection information may include, when an estimated distance between the mobile robot and the user is less than a distance threshold, estimating a face angle of the user based on an angle of at least one of the user's nose or mouth, and outputting the output information may include outputting the output information based on the estimated face angle of the user.

### ADVANTAGEOUS EFFECTS OF INVENTION

According to the present disclosure, user detection information regarding a distance between a mobile robot and a user is generated, and output information is provided based on the generated user detection information, thereby effectively providing information to the user.

In addition, according to the present disclosure, an area in which a user is located is estimated to generate user detection information, and output information is provided based on the generated user detection information, thereby effectively providing information to the user.

In addition, according to the present disclosure, a face of a user is detected, an angle of the detected face of the user is estimated to generate user detection information, and output information is provided based on the generated user detection information, thereby effectively providing information to the user.

### BRIEF DESCRIPTION OF THE DRAWINGS

FIG. 1 is a configuration diagram of a mobile robot for providing output information based on user detection information according to one embodiment of the present disclosure.
FIG. 2 is a flowchart of a method for operating a mobile robot for providing output information based on user detection information according to one embodiment of the present disclosure.
FIG. 3 is a detailed flowchart of step S220 of FIG. 2.
FIG. 4 is an exemplary view of a case in which a mobile robot and a user are located in the same area according to one embodiment of the present disclosure.
FIG. 5 is an exemplary view of a case in which a mobile robot and a user are located in different areas according to one embodiment of the present disclosure.
FIG. 6 is a conceptual diagram for describing output information according to a distance between a mobile robot and a user according to one embodiment of the present disclosure.
FIG. 7 is an exemplary view for describing text output according to a face angle of a user according to one embodiment of the present disclosure.
FIG. 8 is an exemplary view for describing image output according to a face angle of a user according to one embodiment of the present disclosure.
FIG. 9 is a conceptual diagram for describing output information according to a face angle of a user according to one embodiment of the present disclosure.

### BEST MODE FOR CARRYING OUT THE INVENTION

Hereinbelow, preferred embodiments of the present disclosure will be described in greater detail with reference to the accompanying drawings. In the following description, explanations of known functions or structures that may obscure the gist of the present disclosure are omitted.

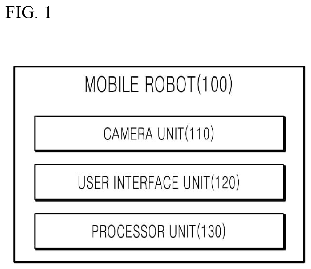

Hereinafter, a mobile robot for providing information based on user detection information and an operating method thereof according to the present disclosure will be described in detail with reference to FIGS. 1 to 9.

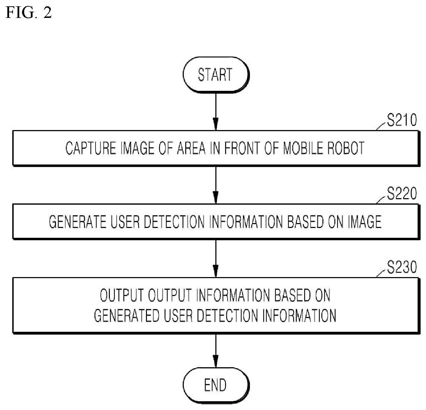

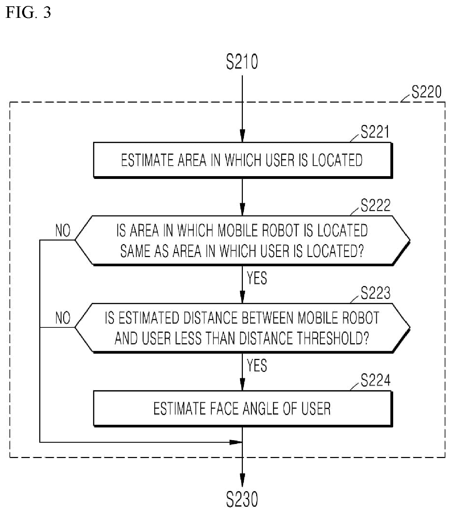

FIG. 1 is a configuration diagram of a mobile robot for providing information based on user detection information according to one embodiment of the present disclosure, FIG. 2 is a flowchart of a method for operating a mobile robot for providing information based on user detection information according to one embodiment of the present disclosure, and FIG. 3 is a detailed flowchart of step S220 of FIG. 2.

Referring to FIG. 1, a mobile robot (100) for providing information based on user detection information according to one embodiment of the present disclosure includes a camera unit (110), a user interface unit (120), a processor unit (130), and the like.

The camera unit (110) captures an image of an area in front of the mobile robot (100) (see step S210 of FIG. 2).

The camera unit (110) includes a depth sensor and an image sensor.

In addition, the camera unit (110) obtains depth information based on images captured through a plurality of sensors.

For example, the depth sensor and the image sensor may be disposed at different positions along the same vertical line. Accordingly, when the depth sensor and the image sensor simultaneously capture an object at the same location, the camera unit (110) obtains depth information by aligning pixel coordinate values of object images captured by the respective sensors. The processor unit (130) may generate user detection information using the depth information obtained by the camera unit (110).

The mobile robot (100) provides output information to a user (200) through the user interface unit (120).

At this time, the output information means information provided to the user (200) during interaction among the mobile robot (100), the user (200), and other devices.

The user interface unit (120) includes at least one of a speaker or a display.

For example, the mobile robot (100) may provide information to the user (200) by outputting sound through the speaker and outputting at least one of an image or text through the display.

When the user (200) is included in an image transmitted from the camera unit (110), the processor unit (130) generates user detection information regarding the user (200) based on the image and a pre-generated map (see step S220 of FIG. 2).

The user detection information includes whether an area in which the mobile robot (100) is located and an estimated area in which the user is located are the same, a distance between the mobile robot (100) and the user (200), and a face angle of the user (200).

First, the processor unit (130) detects the user (200) based on an image captured by the camera unit (110).

For example, when the processor unit (130) detects a human form (e.g., a skeleton form) from the captured image, the processor unit (130) may detect the user (200) by determining whether a face of the detected person matches pre-stored user information (e.g., face ID).

In addition, the processor unit (130) estimates a distance between the mobile robot (100) and the detected user (200) based on depth information for the detected user (200) obtained from the camera unit (110).

In addition, the processor unit (130) estimates an area in which the user (200) is located based on a pre-generated map, a location of the mobile robot (100), and an estimated distance between the mobile robot (100) and the user (200) (see step S221 of FIG. 3).

For example, the processor unit (130) estimates a location of the user (200) by adding the estimated distance between the mobile robot (100) and the user (200) to the location of the mobile robot (100). In addition, the processor unit (130) estimates, as the area in which the user is located, an area corresponding to the estimated location of the user (200) on the pre-generated map.

At this time, the map may be generated based on an image captured by the camera unit (110).

For example, the mobile robot (100) extracts a plurality of feature points from images captured while the mobile robot (100) moves. In addition, by tracking the extracted plurality of feature points, the mobile robot (100) may recognize an initial location of the mobile robot by obtaining location information of the mobile robot (100). In addition, the mobile robot (100) generates a map for a space based on the recognized initial location.

At this time, a feature point means a point that may serve as a reference point for comparing points that change as the mobile robot moves.

In addition, the mobile robot (100) may divide the generated map into a plurality of areas based on passageways in the generated map.

For example, the mobile robot (100) divides the generated map into a plurality of areas based on ends of passageways.

In addition, when the map generated by the mobile robot (100) is transmitted to a user terminal linked with the mobile robot (100), the user (200) may edit the generated map through the user terminal.

For example, the user (200) may adjust spaces and areas in the generated map through the user terminal or edit names for the divided areas. In addition, the edited map is transmitted to and stored in the mobile robot (100).

The processor unit (130) determines whether an area in which the mobile robot (100) is located and an estimated area in which the user is located are the same (see step S222 of FIG. 3).

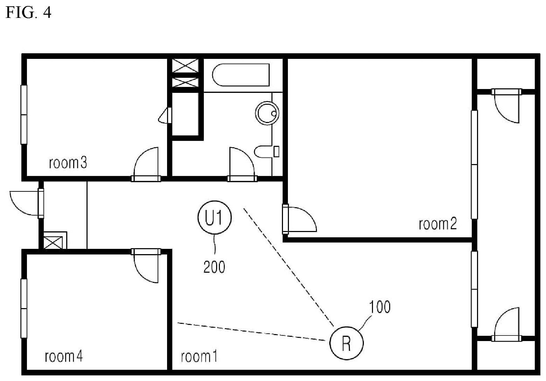

In this regard, FIG. 4 is an exemplary view of a case in which a mobile robot and a user are located in the same area according to one embodiment of the present disclosure.

For example, assuming that an area in which the mobile robot (100) is located and an area in which the user (200) is estimated to be located are a "living room," the processor unit (130) determines that the area in which the mobile robot (100) is located and the area in which the user (200) is located are the same.

In addition, when it is determined that the area in which the mobile robot (100) is located and the area in which the user is located are the same, the processor unit (130) determines whether the estimated distance between the mobile robot (100) and the user (200) is less than a distance threshold (see step S223 of FIG. 3).

At this time, the distance threshold may be implemented as a distance at which the user (200) may perform short-range interaction (e.g., touch, voice recognition, and the like) with the mobile robot (100) without the mobile robot (100) and the user (200) moving.

When the estimated distance between the mobile robot (100) and the user (200) is less than the distance threshold, the processor unit (130) estimates a face angle of the user (200) (see step S224 of FIG. 3).

For example, the processor unit (130) estimates the face angle of the user (200) based on an angle of the nose and an angle of the mouth of the user (200).

Accordingly, a gaze of the user (200) may be estimated through the estimated face angle of the user (200).

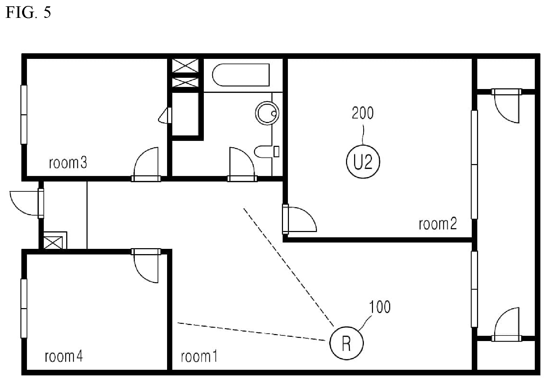

In this regard, FIG. 5 is an exemplary view of a case in which a mobile robot and a user are located in different areas according to one embodiment of the present disclosure.

For example, assuming that an area in which the mobile robot (100) is located is a "living room" and an area in which the user (200) is estimated to be located is a "bedroom," the processor unit (130) determines that the area in which the mobile robot (100) is located and the area in which the user (200) is located are not the same.

In addition, the processor unit (130) outputs output information based on whether an area in which the mobile robot (100) is located and an estimated area in which the user (200) is located are the same, the estimated distance between the mobile robot (100) and the user (200), and the face angle of the user (200) (see step S230 of FIG. 2).

When the mobile robot (100) and the user (200) are present in different areas, the processor unit (130) controls the user interface unit (120) to output sound.

For example, assuming that the mobile robot (100) and the user (200) are in different areas and that the mobile robot (100) detects an abnormal situation, the processor unit (130) may control the user interface unit (120) to output sound, thereby providing the user (200) with a notification of the occurrence of the abnormal situation.

Accordingly, the mobile robot (100) may provide information to the user (200) through sound even when the user (200) cannot view the display.

Meanwhile, when the mobile robot (100) and the user (200) are present in the same space, the processor unit (130) outputs output information based on at least one item of user detection information among the estimated distance between the mobile robot (100) and the user (200) and the face angle of the user (200).

When the estimated distance between the mobile robot (100) and the user (200) is greater than or equal to the distance threshold, the processor unit (130) outputs output information based on the estimated distance between the mobile robot (100) and the user (200).

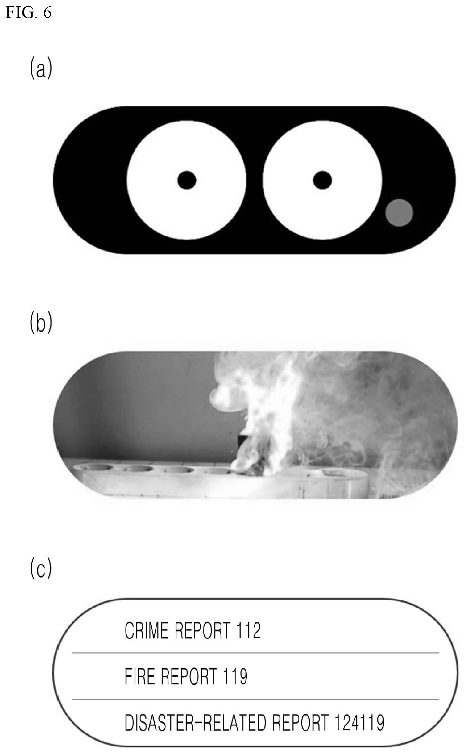

In this regard, FIG. 6 is a conceptual diagram for describing output information according to a distance between a mobile robot and a user according to one embodiment of the present disclosure.

For example, when the user (200) enters an area in which the mobile robot is located, the processor unit (130) may output an icon for an abnormal situation (see FIG. 6a) as output information.

In addition, for example, when the distance between the mobile robot (100) and the user (200) gradually decreases, the processor unit (130) may output an image for the abnormal situation (see FIG. 6b) as output information and may enlarge and output the image as the distance between the mobile robot (100) and the user (200) decreases.

In addition, when the distance between the mobile robot (100) and the user (200) is less than the distance threshold, the processor unit (130) may output an emergency call list (see FIG. 6c) as output information.

At this time, for example, the distance threshold may be implemented as a distance at which a voice of the user (200) may be clearly recognized.

Accordingly, the user (200) may quickly respond to the abnormal situation by selecting one item from among the emergency call list that is output and making an emergency call.

In addition, for example, when the distance between the mobile robot (100) and the user (200) is greater than or equal to the distance threshold, the processor unit (130) outputs a remaining battery level state of the mobile robot (100) as an icon. On the other hand, when the distance between the mobile robot (100) and the user (200) is less than the distance threshold, the processor unit (130) outputs a remaining battery level of the mobile robot (100) in a "number%" format.

In addition, the processor unit (130) controls, for output, the brightness of the display and the volume level of the speaker based on the distance between the mobile robot (100) and the user (200).

For example, the processor unit (130) may control, for output, the display so that the brightness of the display increases as the distance between the mobile robot (100) and the user (200) becomes shorter. In addition, the processor unit (130) may control, for output, the speaker so that the volume level of the speaker increases as the distance between the mobile robot (100) and the user (200) becomes longer.

Meanwhile, when the estimated distance between the mobile robot (100) and the user (200) is less than the distance threshold, the processor unit (130) outputs output information such that the output information is implemented as an image or text based on the estimated face angle of the user (200).

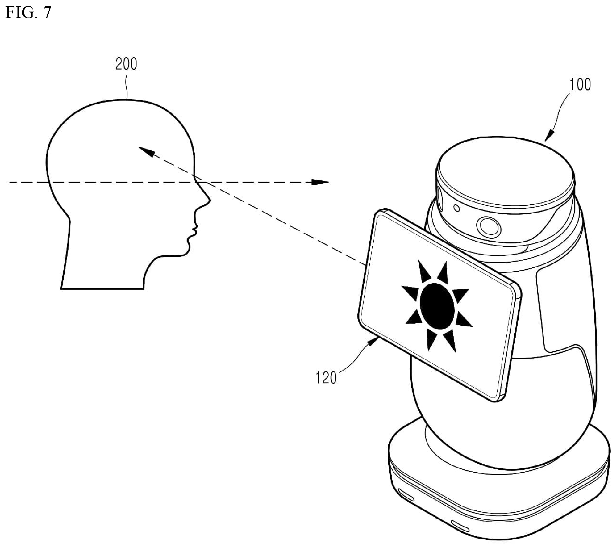

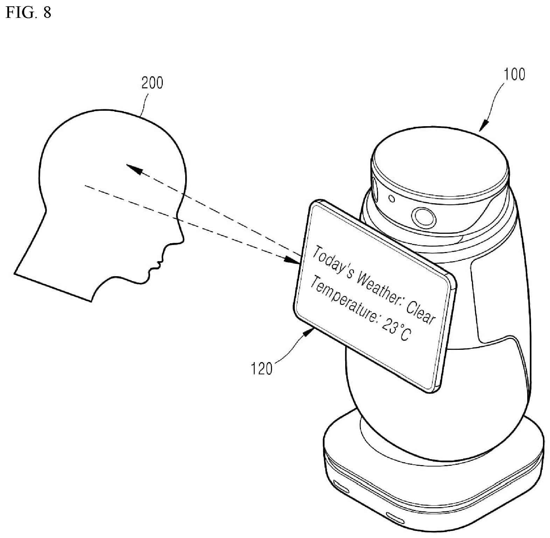

In this regard, FIG. 7 is an exemplary view for describing text output according to a face angle of a user according to one embodiment of the present disclosure, and FIG. 8 is an exemplary view for describing image output according to a face angle of a user according to one embodiment of the present disclosure.

For example, assuming that the mobile robot (100) is outputting weather information, when the location and the face angle of the user (200) correspond to a front direction of the display, the processor unit (130) may control the weather information to be output in a text form (e.g., current weather, temperature, and the like).

On the other hand, when the location and the face angle of the user (200) do not correspond to the front direction of the display, the processor unit (130) may control the weather information to be output in an image form (e.g., a clear weather icon).

In addition, the output information may be moved vertically or horizontally based on the estimated face angle of the user (200).

For example, the output information output on the display may be moved vertically or horizontally based on the face angle of the user (200).

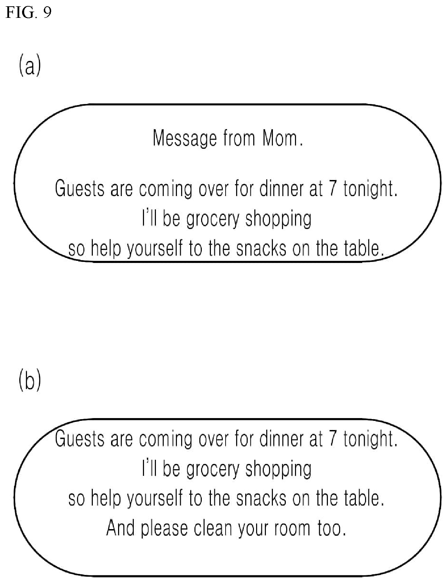

In this regard, FIG. 9 is a conceptual diagram for describing output information according to a face angle of a user according to one embodiment of the present disclosure.

For example, when text exceeding an amount that may be output according to the size of the display is output (see FIG. 9a), if the user (200) lowers his or her head to view the output text, the output information that is output is moved vertically (see FIG. 9b).

Accordingly, when the distance between the mobile robot (100) and the user (200) is short, information optimized for the user (200) may be provided to the user (200) in consideration of a gaze of the user (200) with respect to the mobile robot (100).

Accordingly, the mobile robot (100) outputs output information based on user detection information between the mobile robot (100) and the user (200), thereby effectively delivering information optimized for the user (200) to the user (200) through the user interface unit (120).

## Claims

1. A mobile robot, comprising:
a camera unit configured to capture an image of an area in front of the mobile robot;
a user interface unit comprising at least one of a speaker or a display; and
a processor unit configured to, when a user is included in an image transmitted from the camera unit, generate user detection information regarding the user based on the image and a pre-generated map, and output output information corresponding to the generated user detection information.

2. The mobile robot of claim 1, wherein the processor unit is configured to:
detect a human form and a face in the image,
estimate a distance between the mobile robot and the user when the detected face matches pre-stored user information, and
generate user detection information by estimating an area in which the user is located based on the map and the estimated distance between the mobile robot and the user.

3. The mobile robot of claim 2, wherein the processor unit is configured to control, for output, the brightness of the display and the volume level of the speaker based on the estimated distance between the mobile robot and the user.

4. The mobile robot of claim 2, wherein the processor unit is configured to:
generate user detection information indicating whether the estimated area in which the user is located is the same as an area in which the mobile robot is located, based on the estimated area in which the user is located, and
output the output information based on whether the estimated area in which the user is located and the area in which the mobile robot is located are the same.

5. The mobile robot of claim 4, wherein the output information is implemented as at least one of sound, an image, or text, based on whether the estimated area in which the user is located and the area in which the mobile robot is located are the same.

6. The mobile robot of claim 1, wherein the processor unit is configured to:
when an estimated distance between the mobile robot and the user is less than a distance threshold, generate user detection information by estimating a face angle of the user based on an angle of at least one of the user's nose or mouth, and
output the output information based on the estimated face angle of the user.

7. The mobile robot of claim 6, wherein the output information is implemented as an image or text based on the estimated face angle of the user.

8. The mobile robot of claim 6, wherein the output information is moved vertically or horizontally based on the estimated face angle of the user.

9. A method for operating a mobile robot, the method comprising:
capturing an image of an area in front of the mobile robot;
when a user is included in an image transmitted from a camera unit, generating user detection information regarding the user based on the image and a pre-generated map; and
outputting output information corresponding to the generated user detection information.

10. The method of claim 9, wherein generating the user detection information comprises:
detecting a human form and a face in the image;
estimating a distance between the mobile robot and the user when the detected face matches pre-stored user information; and
estimating an area in which the user is located based on the estimated distance between the mobile robot and the user.

11. The method of claim 10, wherein outputting the output information comprises controlling, for output, a brightness of a display and a volume level of a speaker based on the estimated distance between the mobile robot and the user.

12. The method of claim 10,
wherein generating the user detection information comprises outputting user detection information indicating whether the estimated area in which the user is located is the same as an area in which the mobile robot is located, based on the estimated area in which the user is located, and
wherein outputting the output information comprises outputting the output information based on whether the estimated area in which the user is located and the area in which the mobile robot is located are the same.

13. The method of claim 12, wherein the output information is implemented as at least one of sound, an image, or text based on whether the estimated area in which the user is located and the area in which the mobile robot is located are the same.

14. The method of claim 9,
wherein generating the user detection information comprises, when an estimated distance between the mobile robot and the user is less than a distance threshold, estimating a face angle of the user based on an angle of at least one of the user's nose or mouth, and
wherein outputting the output information comprises outputting the output information based on the estimated face angle of the user.

15. The method of claim 14, wherein the output information is implemented as an image or text based on the estimated face angle of the user.

16. The method of claim 14, wherein the output information is moved vertically or horizontally based on the estimated face angle of the user.
